# EUROPÄISCHE PATENTSCHRIFT

(11) **EP 2 881 283 B1**
(45) Veröffentlichungstag und Bekanntmachung des Hinweises auf die Patenterteilung: **08.03.2017**
(21) Anmeldenummer: 14190584.4
(22) Anmeldetag: 28.10.2014
(51) Int. Cl.: B60Q 1/076, B60Q 1/068

(54) **Kraftfahrzeugscheinwerfer**
Motor vehicle headlamp
Phare de véhicule automobile

(30) Priorität: 28.11.2013 DE 102013224334
(43) Veröffentlichungstag der Anmeldung: 10.06.2015
(73) Patentinhaber: Automotive Lighting Reutlingen GmbH, 72762 Reutlingen (DE)
(72) Erfinder: Wezel, Thomas, 72768 Reutlingen (DE); Müller, Alexander, 72764 Reutlingen (DE)
(74) Vertreter: DREISS Patentanwälte PartG mbB

(56) Entgegenhaltungen:
- EP-A1- 2 803 528
- DE-A1- 10 045 943
- DE-A1-102009 033 910
- FR-A3- 2 837 153

## Beschreibung

Die Erfindung betrifft einen Kraftfahrzeugscheinwerfer nach dem Oberbegriff des Anspruchs 1.

Ein solcher Kraftfahrzeugscheinwerfer weist ein Gehäuse, ein erstes Lichtmodul und ein zweites Lichtmodul auf, die beide in dem Gehäuse angeordnet sind. Das erste Lichtmodul ist um eine eigene erste Achse und um eine eigene zweite Achse schwenkbar. Die zweite Achse steht zur ersten Achse senkrecht und schneidet die erste Achse in einem gemeinsamen ersten Punkt. Die zweite Achse geht durch einen dritten Punkt des ersten Lichtmoduls.

Das zweite Lichtmodul ist um eine eigene erste Achse und um eine eigene zweite Achse schwenkbar. Die zweite Achse steht zur ersten Achse senkrecht und schneidet die erste Achse in einem gemeinsamen ersten Punkt. Die zweite Achse geht durch einen dritten Punkt des zweiten Lichtmoduls.

Die jeweiligen dritten Punkte der beiden Lichtmodule sind über eine Koppelstange beweglich miteinander verbunden, so dass beide Lichtmodule um ihre jeweilige erste Achse gleichzeitig und gleichmäßig schwenkbar sind. Die ersten Achsen liegen bei einer bestimmungsgemäßen Verwendung des Scheinwerfers im Fahrzeug horizontal. Unter einem gleichmäßigen Schwenken wird hier ein Schwenken um gleiche Schwenkwinkel verstanden.

Ein solcher Scheinwerfer ist aus der DE 10 2009 033 910 bekannt.

Die nicht vorveröffentlichte EP 2 803 528 A1 zeigt neben den Merkmalen des Oberbegriffs zusätzlich, dass die Koppelstange ein erstes stabartiges Koppelelement und ein zweites stabartiges Koppelelement aufweist, wobei ein erstes der beiden stabartigen Koppelelemente in dem dritten Punkt des ersten Lichtmoduls beweglich an das erste Lichtmodul angelenkt ist und ein zweites der beiden stabartigen Koppelelemente in dem dritten Punkt des zweiten Lichtmoduls beweglich an das zweite Lichtmodul angelenkt ist und wobei die Koppelelemente an einem, dem jeweils ersten Ende gegenüberliegenden zweiten Ende mittels einer Gewindeverbindung miteinander verbunden sind, wobei eines der Koppelelemente auf der Gewindeverbindung nicht rotierbar ist und ein erster Teil des anderen Koppelelements auf der Gewindeverbindung rotierbar ist.

Die Schwenkbarkeit erlaubt jeweils eine Verstellung der Richtung des abgestrahlten Lichtbündels in einer zur jeweiligen Achse senkrechten Richtung.

Insbesondere bei stark gepfeilten modernen Scheinwerfern wird eine Lichtfunktion häufig von mehreren, gemeinsam betriebenen Lichtmodulen verwirklicht, von denen jedes einen Teil einer insgesamt zu erzeugenden Lichtverteilung erzeugt. Unter einer Lichtfunktion wird dabei die Funktion verstanden, eine bestimmte regelkonforme Lichtverteilung zu erzeugen. Ein Beispiel einer solchen Lichtverteilung ist eine Fernlichtverteilung, die durch einen gleichzeitigen Betrieb eines Abblendlichtmoduls und eines Bereiche oberhalb der Hell-Dunkel-Grenze des Abblendlichtmoduls ausleuchtenden Fernlichtmoduls erzeugt wird. Die Lichtmodule sind meist in Fahrtrichtung stark zueinander versetzt angeordnet.

Um regelkonforme Lichtverteilungen erzeugen zu können, müssen die Abstrahlrichtungen der Lichtmodule relativ zueinander justiert werden und außerdem muss im Fahrzeug noch eine Grundeinstellung erfolgen, mit der die Abstrahlrichtungen insgesamt regelkonform eingestellt werden. Dieser Grundeinstellung ist im Betrieb unter Umständen noch eine automatisch erfolgende Regelung der Leuchtweite überlagert, mit der ein Einfluss unterschiedlicher Fahrzeugneigungen durch Beladungen und/oder dynamische Achslastverlagerungen kompensiert wird.

Mit der Justage werden Fertigungstoleranzen des Scheinwerfers ausgeglichen. Folglich ist unter Justage eine einmalige Einstellung eines Lichtmoduls im Scheinwerfer relativ zu einem anderen Lichtmodul zu verstehen. In der Regel wird die Justage mit Hilfe eines Spezialwerkzeuges bei der Scheinwerferfertigung durchgeführt. Die Verwendung eines Spezialwerkzeuges erfolgt mit dem Ziel, Manipulationen durch später mögliche unsachgemäße Eingriffe zu erschweren. Die Grundeinstellung kann dagegen während der Fahrzeuglebensdauer wiederholt werden und dient zur Einstellung der Scheinwerfer im eingebauten Zustand relativ zur Fahrbahn. Die Grundeinstellung ist vom Endkunden oder einer Servicewerkstatt durchzuführen.

Mit einer der Grundeinstellung überlagerten Leuchtweitenregelung wird ein Abstrahlwinkel des Scheinwerfers relativ zur Fahrbahn gegengleich zu einer Änderung der Neigung der Fahrzeugkarosserie verändert, die in einer Längsrichtung des Kraftfahrzeugs auftritt. Die Leuchtweitenregulierung kann automatisch oder manuell erfolgen.

Die oben genannte Koppelstange dient dazu, die Abstrahlrichtungen der gemeinsam zu betreibenden Lichtmodule in einer aufeinander abgestimmten Weise gemeinsam zu verstellen. Dies gilt insbesondere für um horizontale Achsen herum erfolgende Verstellungen. In der Regel wird man beide Lichtmodule zeitgleich mit gleichem Verstellwinkel um ihre jeweilige horizontale Achse verstellen wollen. Somit ist auch gewährleistet, dass eine Leuchtweitenregelung beide Lichtmodule gleichzeitig und in gleiche Richtungen und um gleiche Verstellwinkel verstellt. Die Bewegung der Lichtmodule um ihre jeweilige vertikale Achse ist in der Regel nicht gekoppelt.

Jedes der Lichtmodule weist eine erste und eine zu der ersten Achse senkrecht stehende zweite Achse auf.

Die beiden Lichtmodule sind jeweils um ihre Achsen schwenkbar. Die erste Achse und die zweite Achse schneiden sich in einem Punkt. Die erste Achse und die zweite Achse spannen eine Ebene auf, in der das Lichtmodul gelagert ist, so dass eine Rotation der Lagerebene um die erste Achse einen Winkel verändert, den das von dem Lichtmodul ausgehende Licht mit einer Ebene einschließt, die zum Beispiel parallel zur Fahrbahn orientiert ist. Die Rotation der Lagerebene um die zweite Achse verändert dann einen Winkel, den das von dem Lichtmodul ausgehende Licht mit einer Ebene einschließt, die von der Fahrzeuglängsachse und der Fahrzeughochachse aufgespannt wird.

Mit der Verstellung werden zum Beispiel Fertigungstoleranzen der Karosserie und des Scheinwerfers ausgeglichen, und/oder es wird eine Neigung der Kraftfahrzeuglängsachse bezüglich der Fahrbahn ausgeglichen. Insgesamt wird durch die Einstellung der Lichtmodule deren Lichtverteilung im Vorfeld des Kraftfahrzeugs in horizontaler und vertikaler Richtung verschoben, um eine regelkonforme Lichtverteilung zu gewährleisten.

Eine vertikale Einstellung der Lichtverteilung der Lichtmodule erfolgt durch ein Kippen des entsprechenden Lichtmoduls um seine erste, horizontale Achse. Eine horizontale Einstellung der Lichtverteilung der Lichtmodule erfolgt durch ein Kippen des entsprechenden Lichtmoduls um seine zweite, vertikale Achse.

Um mehrere Lichtmodule zeitgleich, in einem gleichen Winkel um ihre jeweilige horizontale Achse zu verstellen, werden die Lichtmodule im Scheinwerfer gekoppelt. Somit ist auch gewährleistet, dass ein LWR-Antrieb beide Lichtmodule synchron antreibt. Die Bewegung der Lichtmodule um ihre jeweilige vertikale Achse ist in der Regel nicht gekoppelt.

Bei dem bekannten Lichtmodul ist eine Justage, also eine Veränderung der Lage des zweiten Lichtmoduls relativ zu dem ersten Lichtmodul nach erfolgter Kopplung, das heißt in der Regel nach Zusammenbau und/oder Einbau des Scheinwerfers im Kraftfahrzeug, nicht vorgesehen.

Das Lichtmodul ist bei dem bekannten Lichtmodul in drei Punkten im Gehäuse aufgenommen. Damit das zweite Lichtmodul relativ zu dem ersten Lichtmodul justiert werden kann, sind die drei Punkte als Loslager ausgebildet. Dadurch ist es schwierig, insbesondere große, schwere und/oder nicht in ihrem Schwerpunkt aufgenommene Lichtmodule stabil und spielfrei zu lagern.

Vor diesem Hintergrund besteht die Aufgabe der Erfindung in der Angabe eines Kraftfahrzeugscheinwerfers, bei dem eine Rotation eines ersten Lichtmoduls um seine erste, horizontale Achse mit einer Rotation eines zweiten Lichtmoduls um seine erste, horizontale Achse gekoppelt ist, wobei das zweite Lichtmodul aber auch um seine erste horizontale Achse rotierbar ist ohne die Lage des ersten Lichtmoduls zu beeinflussen. Außerdem soll diese Rotation des zweiten Lichtmoduls um seine erste Achse ohne Beeinflussung der Lage des ersten Lichtmoduls auch bei im Kraftfahrzeug montiertem Scheinwerfer durchführbar sein. Die Aufgabe wird von einem Kraftfahrzeugscheinwerfer mit den Merkmalen des Anspruchs 1 gelöst.

Der erfindungsgemäße Scheinwerfer zeichnet sich dadurch aus, dass die Koppelstange ein erstes stabartiges Koppelelement und ein zweites stabartiges Koppelelement aufweist, wobei ein erstes der beiden stabartigen Koppelelemente in dem dritten Punkt des ersten Lichtmoduls beweglich an das erste Lichtmodul angelenkt ist und ein zweites der beiden stabartigen Koppelelemente in dem dritten Punkt des zweiten Lichtmoduls beweglich an das zweite Lichtmodul angelenkt ist und wobei die Koppelelemente an einem, dem jeweils ersten Ende gegenüberliegenden zweiten Ende mittels einer Gewindeverbindung miteinander verbunden sind, wobei eines der Koppelelemente auf der Gewindeverbindung nicht rotierbar ist und ein erster Teil des anderen Koppelelements auf der Gewindeverbindung rotierbar ist und dass das zweite Koppelelement mittels eines Schneckengetriebes rotiert werden kann, wobei ein Zahnrad koaxial zu einer Rotationsachse der Gewindeverbindung an dem zweiten Koppelelement angeordnet ist und eine Schneckenwelle senkrecht zu der Rotationsachse steht. Die Schneckenwelle überträgt eine Rotationsbewegung auf das Zahnrad. Dabei wird die Ebene, in der die Rotationsbewegung ausgeführt wird, um 90° gedreht. Vorzugsweise ist die Schneckenwelle so ausgeführt, dass sie in einer Durchführung durch das Gehäuse nach außen ragt oder mittels eines Werkzeugs durch eine Öffnung im Gehäuse in Rotation versetzt werden kann. Dadurch ist es möglich, die Justage des zweiten Lichtmoduls bei bereits im Kraftfahrzeug montiertem Scheinwerfer auszuführen.

Durch die Gewindeverbindung ist das zweite Koppelelement relativ zu dem ersten Koppelelement verschiebbar, so dass eine Länge der Koppelstange veränderbar ist. Durch eine Veränderung der Länge der Koppelstange wird der dritte Punkt, der ortsfest an dem zweiten Lichtmodul oder an einem das zweite Lichtmodul umgebenden zweiten Halterahmen angeordnet ist, relativ zu dem dritten Punkt, der ortsfest an dem ersten Lichtmodul oder an einem das erste Lichtmodul umgebenden ersten Halterahmen angeordnet ist, verschoben. Somit wird das zweite Lichtmodul um seine erste, horizontale Achse rotiert, ohne dass dabei das erste Lichtmodul in seiner Lage beeinflusst wird.

Es wird vorgeschlagen, dass die Lichtmodule in ihrem ersten Punkt und in ihrem zweiten Punkt und in ihrem dritten Punkt Kugelgelenke aufweisen. Kugelgelenke ermöglichen eine reibungsarme und nahezu spielfreie Lagerung der Lichtmodule im Gehäuse und eine reibungsarme und nahezu spielfreie gelenkige Verbindung des ersten Lichtmoduls mit dem zweiten Lichtmodul durch die Koppelstange. Dadurch erfolgt die gekoppelte Verstellung des zweiten Lichtmoduls gleichzeitig und im gleichen Winkel wie die Verstellung des ersten Lichtmoduls.

Ergänzend wird vorgeschlagen, dass das erste Lichtmodul in seinem dritten Punkt über ein Gelenkteil an die Koppelstange angekoppelt ist. Das Gelenkteil ist dazu eingerichtet, die Ankopplung des Lichtmoduls an die Koppelstange mit einem zusätzlichen Freiheitsgrad zu ermöglichen, so dass bei Rotation des ersten Lichtmoduls um seine zweite Achse entstehende Momente ausgeglichen werden. Dadurch bleibt die Mechanik der Lichtmodule mit zwei Halterahmen, die über eine Koppelstange beweglich mit einander verbunden sind, spannungsfrei, wenn nur eines der Lichtmodule verstellt wird.

Eine Ausgestaltung sieht vor, dass das erste Lichtmodul und das zweite Lichtmodul jeweils in mindestens einem Festlager aufgenommen sind. Durch die über eine Längenänderung der Koppelstange erfolgende Justage ist es gegenüber dem Stand der Technik nicht mehr notwendig, das zweite Lichtmodul ausschließlich in Loslagern aufzunehmen. Es wird vorgeschlagen, den ersten Punkt des zweiten Lichtmoduls analog zum ersten Punkt des ersten Lichtmoduls als Festlager auszuführen. Das Festlager ist ortsfest im Gehäuse angeordnet und kann dadurch Kräfte direkt und nahezu spielfrei aufnehmen. Dies ist insbesondere bei großen, schweren und/oder nicht im Schwerpunkt aufgenommenen Modulen vorteilhaft.

Eine weitere vorteilhafte Ausgestaltung sieht vor, dass das Zahnrad an einem Umfang zwischen dem ersten Ende und dem zweiten Ende des zweiten Koppelelements angeordnet ist. Das Zahnrad oder Elemente, die das Zahnrad auf dem zweiten Koppelelement haltern, sind dabei hülsenartig auf dem Ankoppelelement angeordnet, so dass dieses zusätzlich gegen ein unbeabsichtigtes Lösen gesichert ist.

Weiterhin wird vorgeschlagen, dass die Schneckenwelle nur auf halben Umfang eine Schneckengeometrie aufweist. Dadurch ist es möglich, die Schneckengeometrie aus dem Eingriff des Zahnrads zu nehmen. Die Schneckenwelle ist dann in Längsrichtung relativ zum Zahnrad verschiebbar. Dadurch kann die Schneckenwelle zur Justage durch Drehung in Eingriff mit dem Zahnrad gebracht werden und nach erfolgter Justage entweder aus dem Gehäuse entfernt werden oder im Gehäuse versenkt und eingerastet werden.

Ergänzend wird vorgeschlagen, dass die Schneckengeometrie als zweigängige Schnecke ausgeführt ist. Bei Schneckengetrieben berechnet sich das Übersetzungsverhältnis als Quotient der Zähnezahl des Zahnrades und der Gangzahl der Schneckenwelle. Das bedeutet, dass die Schneckenwelle viele Umdrehungen ausführen muss, um eine Umdrehung des Zahnrades zu erzielen. Dadurch wird einerseits eine sehr feine Justierung des zweiten Lichtmoduls möglich. Anderseits erfordert die Justage viel Zeit, da eventuell eine große Anzahl Umdrehungen der Schneckenwelle ausgeführt werden muss. Durch Verwendung einer zweigängigen Schnecke wird die Anzahl der Umdrehungen halbiert, die die Schneckenwelle benötigt, um eine Umdrehung des Zahnrades zu erzielen. Dadurch wird ein Kompromiss erreicht, der die für die Justage benötigte Zeit verkürzt und eine geforderte Feinheit der Einstellung sichert. Somit ist die Justage effizienter durchführbar.

Eine weitere Ausgestaltung besteht darin, dass im Gehäuse eine ortsfeste Führung angeordnet ist, die dazu eingerichtet ist, die Schneckenwelle aufzunehmen. Die Führung ist beispielsweise zylindrisch ausgeführt, so dass die Schneckenwelle mit einem ersten Wellenende in die Führung geschoben wird. Die Führung ist als Radial- und Axiallager ausgestaltet. Das Wellenende weist Positionierungselemente auf, die das Einführen der Schneckenwelle in die Führung erleichtern und die Schneckenwelle in der Führung positionieren. Weiterhin ist vorgesehen dass das Wellenende Rastelemente aufweist, durch die die Schneckenwelle in der Führung reversibel einrastet. Infolge der Verzahnung treten bei der Schneckenwelle Axialkräfte auf. Weil die Schneckenwelle im Uhrzeigersinn und gegen den Uhrzeigersinn gedreht wird wirken die Axialkräfte in zwei Richtungen. Die Führung nimmt die auftretenden Axialkräfte auf. Außerdem wird eine Entnahme der Schneckenwelle nach erfolgter Justage und eine erneutes Einsetzen in das Gehäuse erleichtert.

Es wird vorgeschlagen, dass ein zweites Wellenende ein Mitnahmeprofil aufweist. Das zweite Wellenende der Schneckenwelle kann durch eine Öffnung im Gehäuse erreicht werden. In das Mitnahmeprofil wird ein Werkzeug aufgenommen, durch welches die Schneckenwelle in Rotation versetzt wird. Dadurch ist eine Justage des zweiten Lichtmoduls nach dem Einbau des Scheinwerfers im Kraftfahrzeug möglich. Es ist denkbar, das Mitnahmeprofil als Sonderprofil auszuführen, so dass die Schneckenwelle nur mit einem Sonderwerkzeug gedreht werden kann und somit der Scheinwerfer vor Manipulation durch Unbefugte geschützt ist.

Ergänzend wird vorgeschlagen, das Mitnahmeprofil als Innensechskant auszuführen. Innensechskantschlüssel sind gängige Werkzeuge, so dass der die Justage ausführende Betrieb keine teuren Sonderwerkzeuge bereithalten muss.

Ergänzend wird vorgeschlagen, dass ein zweites Wellenende der Schneckenwelle in einer Durchführung im Gehäuse gelagert ist. Die Durchführung stützt die Schneckenwelle in radialer Richtung und verbessert dadurch die Kraftübertragung auf das Zahnrad.

Günstig ist es ferner, dass die Durchführung oder das zweite Wellenende Dichtelemente aufweisen. Dadurch wird verhindert, dass Feuchtigkeit oder Schmutz in den Scheinwerfer eindringen und sich auf der transparenten Abdeckscheibe oder anderen optisch wirksamen Bauteilen niederschlagen und so die Lichtverteilung des Scheinwerfers beeinträchtigen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen, jeweils in schematischer Form:
- Figur 1: eine Mechanik eines Scheinwerfers in einer Prinzipskizze;
- Figur 2: eine erste Ausgestaltung einer Merkmale der Erfindung aufweisenden Koppelstange in perspektivischer Ansicht;
- Figur 3: eine zweite Ausgestaltung der Koppelstange;
- Figur 4: ein Schneckengetriebe in perspektivischer Ansicht; und
- Figur 5: mechanische Bauteile eines Scheinwerfers in perspektivischer Ansicht.

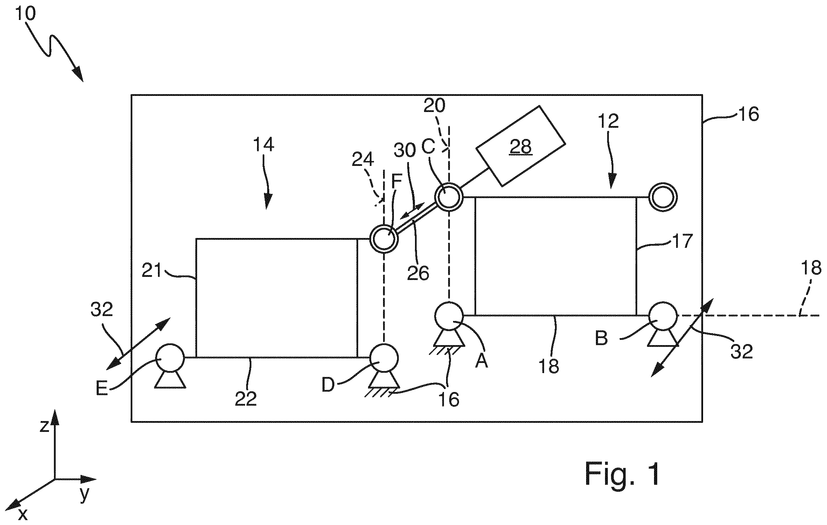

Figur 1 zeigt skizzenhaft und in perspektivischer Ansicht einen Kraftfahrzeugscheinwerfer 10 mit einem ersten Lichtmodul 12 und einem zweiten Lichtmodul 14. Das erste Lichtmodul 12 ist zum Beispiel ein Abblendlichtmodul, und das zweite Lichtmodul 14 ist zum Beispiel ein Fernlichtmodul. Speziell bei mit Halbleiterlichtquellen ausgerüsteten Scheinwerfern ist eines der beiden Lichtmodule als Spotlichtmodul und das andere der beiden Lichtmodule als Grundlichtmodul ausgestaltet.

Die beiden Lichtmodule 12 und 14 sind in dem Gehäuse 16 so angeordnet, dass eine Hauptabstrahlrichtung der Lichtmodule 12 und 14 bei einer bestimmungsgemäßen Verwendung des Scheinwerfers in einem Kraftfahrzeug jeweils in die Fahrtrichtung zeigt. Beim Gegenstand der Figur 1 ist diese Fahrtrichtung parallel zu der x-Achse des in der Figur 1 dargestellten Koordinatensystems. Das Koordinatensystem ist so orientiert, dass seine y-Achse quer zur Fahrtrichtung liegt und seine z-Achse zur Hochachse des Kraftfahrzeugs parallel liegt.

Das erste Lichtmodul 12 ist in x-Richtung und y-Richtung versetzt zum zweiten Lichtmodul 14 angeordnet. Die beiden Lichtmodule 12 und 14 sind also nicht nur in horizontaler und vertikaler Richtung, sondern in der Regel auch in Richtung der Fahrzeuglängsachse zueinander versetzt. Je nach ihrer Ausgestaltung erzeugen die beiden Lichtmodule in einem Vorfeld des Kraftfahrzeugs zusammen oder jedes für sich genommen eine regelkonforme Lichtverteilung.

Es sei darauf hingewiesen, dass alle nachfolgend verwendeten Lagebezeichnungen wie oben, unten, waagerecht und senkrecht sich auf die bestimmungsgemäße Verwendung des Scheinwerfers in einem Kraftfahrzeug beziehen, das auf einem ebenen, nicht geneigten Untergrund steht.

Das erste Lichtmodul 12 ist in einem Halterahmen 17 angeordnet und gehaltert, der in zwei Punkten A und B im Gehäuse 16 aufgenommen ist. Ein erster Punkt A ist als Festlager ausgebildet. Der Punkt A ist ortsfest im Gehäuse 16 angeordnet. Ein zweiter Punkt B ist als Loslager ausgebildet. Der zweite Punkt B ist in einer Führung verschiebbar aufgenommen. Die Führung ist ortsfest in dem Gehäuse 16 angeordnet und verläuft in einer horizontalen Ebene längs eines Kreisbogens, dessen Mittelpunkt im Punkt A liegt und dessen Radius dem Abstand der Punkte A und B entspricht. Der Halterahmen 17 ist einerseits in dem ersten Punkt A und andererseits in dem zweiten Punkt B um eine erste, horizontal liegende Achse 18, die durch die Punkte A und B geht, frei schwenkbar gelagert. Weiterhin ist der Halterahmen 17 um eine zweite, vertikale Achse 20 schwenkbar gelagert, die durch die Punkte A und C geht. Der dritte Punkt C ist starr mit dem Halterahmen 17 verbunden.

Das zweite Lichtmodul 14 ist in einem Halterahmen 21 angeordnet, der in zwei Punkten im Gehäuse 16 aufgenommen ist. Ein erster Punkt D ist als Festlager ausgebildet. Der Punkt D ist ortsfest im Gehäuse 16 angeordnet. Ein zweiter Punkt E ist als Loslager ausgebildet. Der zweite Punkt E ist in einer Führung verschiebbar aufgenommen. Die Führung ist ortsfest in dem Gehäuse 16 angeordnet und verläuft in einer horizontalen Ebene längs eines Kreisbogens, dessen Mittelpunkt im Punkt D liegt und dessen Radius dem Abstand der Punkte D und E entspricht.

Der Halterahmen 21 weist eine erste, horizontal liegende Achse 22 auf, die durch die Punkte D und E geht, so dass der Halterahmen in diesen Punkten um diese Achse frei schwenkbar gelagert ist. Weiterhin weist das zweite Lichtmodul 14 eine zweite vertikale Achse 24 auf. Die zweite Achse 24 läuft durch den ersten Punkt D und den dritten Punkt F, so dass der Halterahmen 21 in diesen Punkten um diese zweite Achse herum frei drehbar gelagert ist. Der dritte Punkt F ist starr mit dem Halterahmen 21 verbunden.

Die Lagerung der Halterahmen in einem jeweiligen ersten Punkt und einem jeweiligen zweiten Punkt, die so erfolgt, dass der Halterahmen um die erste Achse und um die zweite Achse frei schwenkbar ist, lässt sich beispielsweise mittels Kugelgelenken ausführen. Dabei weisen der erste Punkt und der zweite Punkt halterahmenseitig jeweils eine Kugel auf. Die Kugeln werden in entsprechende gehäuseseitige Aufnahmen eingerastet. Alternativ weisen der erste Punkt und der zweite Punkt halterahmenseitig jeweils eine Aufnahme auf. Mit den Aufnahmen werden entsprechende gehäuseseitige Kugeln verrastet. Weiter alternativ sind auch Mischformen möglich, bei denen halterahmenseitig und gehäuseseitig jeweils sowohl Kugeln als auch Aufnahmen vorgesehen sind.

Zur Realisierung eines Festlagers sind die Aufnahmen starr mit dem Gehäuse 16 verbunden. Ein Loslager ist durch relativ zum Gehäuse 16 verschiebbare Aufnahmen realisiert. Das Verschieben der Aufnahmen erfolgt in starr mit dem Gehäuse 16 verbundenen Führungen.

Eine Koppelstange 26 verbindet den dritten Punkt C des ersten Lichtmoduls 12 mit dem dritten Punkt F des zweiten Lichtmoduls 14. Die Koppelstange 26 weist im Wesentlichen in Fahrtrichtung, das heißt, die größte Richtungskomponente der Ausrichtung der Koppelstange 26 weist in Fahrtrichtung. Abweichungen in der x-y-Ebene sind bis zu einem Winkel von 5° mögliche. Der Winkel in der x-z-Ebene hängt von der Einbauhöhe der Lichtmodule im Scheinwerfer 10 ab. Bevorzugt ist der Abstand der Achse 22 zu dem dritten Punkt F und der Abstand der Achse 18 zu dem dritten Punkt C gleich groß. Das heißt, der Winkel der Koppelstange 26 in der x-z-Ebene ist abhängig von der Einbaulage der horizontalen Achse 18 und der Einbaulage der horizontalen Achse 22 bezügliche der z-Achse.

Die Koppelstange 26 ist einerseits in dem dritten Punkt C mit dem ersten Lichtmodul 12 und anderseits in dem dritten Punkt F mit dem zweiten Lichtmodul 14 gelenkig verbunden. Dazu weist die Koppelstange 26 an ihren beiden Enden beispielsweise jeweils Kugelaufnahmen auf. In den dritten Punkten C, F der Lichtmodule 12, 14 sind jeweils Kugeln angeordnet. Die Kugelaufnahmen des Koppelelements sind im montierten Zustand mit den Kugeln verrastet. Es ist auch denkbar, dass eine oder beide Kugeln an der Koppelstange 26 angebracht sind und eines oder beide Module die entsprechenden Kugelaufnahmen aufweisen.

Um stets eine regelkonforme Lichtverteilung zu erzielen, ist die Lage der Lichtmodule 12, 14 relativ zu dem starr mit dem übrigen Fahrzeug verbundenen Gehäuse 16 einstellbar. Dabei wird zwischen einer Grundeinstellung und einer Justage unterschieden.

Bei der Grundeinstellung erfolgt eine Schwenkung des ersten Lichtmoduls 12 um seine erste, horizontale Achse 18 und eine mit dieser Schwenkung über die Koppelstange 26 gekoppelte Schwenkung des zweiten Lichtmoduls 14 um seine erste, horizontale Achse 22. Dabei wird das zweite Lichtmodul 14 zeitgleich mit dem ersten Lichtmodul um bevorzugt den gleichen Winkel um seine erste Achse 22 geschwenkt, um den das erste Lichtmodul 12 um seine erste Achse 18 geschwenkt wird. Dadurch wird eine Lichtverteilung der Lichtmodule in vertikaler Richtung verschwenkt, wobei die Lage der einzelnen Lichtverteilungen des jeweiligen Lichtmoduls relativ zueinander erhalten bleibt.

Eine Leuchtweitenregulierung (LWR) verwendet bevorzugt die gleichen Strukturen wie die Grundeinstellung. Eine möglichst konstante Leuchtweite eines Kraftfahrzeugscheinwerfers wird dadurch erreicht, dass ein Abstrahlwinkel des Scheinwerfers zur Fahrbahn gegengleich zu einer Änderung der Neigung der Fahrzeugkarosserie verändert, die in einer Längsrichtung des Kraftfahrzeugs auftritt. Die Leuchtweitenregulierung kann automatisch oder manuell erfolgen.
Beim Gegenstand der Figur 1 ist ein Stellelement 28 dazu eingerichtet und angeordnet, den dritten Punkt C des ersten Lichtmoduls 12 in der x-Richtung zu bewegen. Dadurch führt das erste Lichtmodul 12 eine Schwenkbewegung um seine erste Achse 18 aus. Die Koppelstange 26 überträgt die Schwenkbewegung 30 auf den dritten Punkt F des zweiten Lichtmoduls 14. Dadurch führt das zweite Lichtmodul 14 eine Schwenkbewegung um seine erste Achse 22 aus. Liegen die zwischen der ersten Achse und der zweiten Achse des jeweiligen Lichtmoduls aufgespannten Lagerebenen parallel zueinander und ist ein Abstand des dritten Punkts F von dem ersten Punkt D gleich einem Abstand des dritten Punkts C von dem ersten Punkt A, führen die Lichtmodule eine identische Bewegung um ihre erste Achse aus.

Die Drehung eines Lichtmoduls um seine zweite Achse wird durch eine Bewegung 32 seines zweiten Punktes in x-Richtung herbeigeführt. Die Bewegung 32 ist in der Figur 1 durch Pfeile dargestellt. Die Drehung der Lichtmodule um die zweite Achse schwenkt die Lichtverteilung in horizontaler Richtung. Das Schwenken der Lichtverteilungen beider Lichtmodule in horizontaler Richtung ist in der Regel nicht miteinander gekoppelt.

Die Justage bedeutet eine einmalige Einstellung eines Lichtmoduls im Scheinwerfer relativ zu dem anderen Lichtmodul. Die Justage wird meist bei der Fertigung der Scheinwerfer ausgeführt. Außerdem erfordert die Justage in der Regel ein Spezialwerkzeug, um eine nachträgliche, unbefugte Manipulation des Scheinwerfers zu verhindern. Mit anderen Worten: Der Scheinwerfer ist dazu eingerichtet, eine Justage nur mit der Verwendung von Spezialwerkzeug zu erlauben.
Eine Justage des zweiten Lichtmoduls 14 hinsichtlich seiner Abstrahlrichtung in der Vertikalen relativ zum ersten Lichtmodul 12 erfolgt durch eine Drehung um seine horizontale Achse 22. Dabei erfolgt keine Verdrehung des ersten Lichtmoduls 12 um seine erste Achse 18. Eine solche von dem ersten Lichtmodul entkoppelte Einstellung des zweiten Lichtmoduls erfolgt durch eine Änderung einer Länge der Koppelstange 26. Dabei wird der dritte Punkt F des zweiten Lichtmoduls 14 relativ zu dem dritten Punkt C des ersten Lichtmoduls 12 in x-Richtung verschoben. Dadurch wird das zweite Lichtmodul 14 um seine erste Achse 22 gedreht, und die Lichtverteilung des zweiten Lichtmoduls wird in vertikaler Richtung verschoben. Eine Lage und damit die Lichtverteilung des ersten Lichtmoduls 12 bleiben unbeeinflusst.

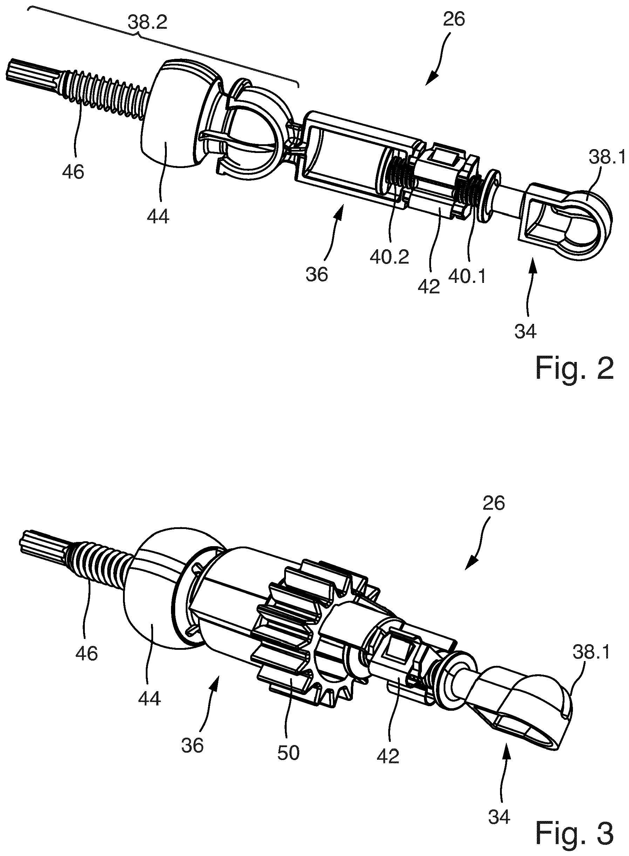

Figur 2 zeigt eine Ausgestaltung der Koppelstange 26. Die Koppelstange 26 weist ein erstes Koppelelement 34 und ein zweites Koppelelement 36 auf. Das erste Koppelelement 34 und das zweite Koppelelement 36 weisen jeweils eine stabartige Grundform auf. Das stabartige erste Koppelelement 34 weist an einem ersten, distalen Ende ein erstes Ankoppelelement 38.1 auf. Das stabartige zweite Koppelelement 36 weist an seinem ersten, distalen Ende ein zweites Ankoppelelement 38.2 auf.

An einem zweiten, dem ersten Ende gegenüberliegenden proximalen Ende des ersten Koppelements 34 weist dieses ein erstes Gewindeelement 40.1 auf. Analog dazu weist das zweite Koppelelement 36 an seinem zweiten, dem ersten Ende gegenüberliegenden proximalen Ende ein zweites Gewindeelement 40.2 auf.

Die beiden Gewindeelemente 40.1 und 40.2 bilden jeweils ein Gegengewinde zu dem Gewindeelement 40.2 und 40.2 des jeweils anderen Koppelelements und wirken im montierten Zustand als Gewindeverbindung wie Schraube und Mutter zusammen. Somit sind das erste Koppelelement 34 und das zweite Koppelement 36 mittels einer Gewindeverbindung miteinander verbunden. Das erste Kopplungsstück 34 ist auf dem Gewinde des zweiten Kopplungsstücks 36 nicht rotierbar, und das zweite Kopplungsstück 36 ist auf dem Gewinde des ersten Kopplungsstücks rotierbar ausgebildet. Das zweite Kopplungsstück kann insbesondere wie eine Mutter auf einem Gewindebolzen durch Drehung translatorisch bewegt werden.

Das erste Ankoppelelement 38.1 des ersten Koppelelements 34 ist als Kugelaufnahme ausgebildet. In die Kugelaufnahme wird beispielsweise eine Kugel, die in dem dritten Punkt F des zweiten Lichtmoduls 14 angeordnet ist, eingerastet. Einrasten bezeichnet hier einen Vorgang, bei dem die Kugel unter Vorspannung in der Kugelaufnahme aufgenommen und verrastet wird. Nach dem Einrasten ist die Kugel in der Aufnahme frei drehbar.

Das Gewindeelement 40.1 des ersten Koppelelements 34 ist als Gewindebolzen ausgeführt, der ein Außengewinde aufweist.

Das Gewindeelement 40.2 des zweiten Koppelelements 36 ist als Gewindehülse ausgeführt, die ein Innengewinde aufweist. Die Gewindehülse ist bevorzugt in axialer Richtung in zwei Teile, insbesondere zwei Hälften geteilt, die durch ein beide Teile klammerartig umgreifendes Federelement 42 zusammengehalten und im zusammengehaltenen Zustand auf dem Gewindebolzen gehalten werden.

Das zweite Ankoppelelement 38.2 ist als Kugelaufnahme ausgebildet, mit dem ein Gelenkelement 44 mittels eines Kugelgelenks verrastet ist. In das Gelenkelement 44 ist eine Stange 46 gelenkig aufgenommen. Das Gelenkelement 44 ist dazu eingerichtet und angeordnet, mit dem dritten Punkt C des ersten Lichtmoduls 12 gelenkig verbunden zu sein. Die Stange 46 ist dazu eingerichtet, an einen Stellantrieb (nicht dargestellt)anzukoppeln. Dazu weist die Stange zum Beispiel ein Verstellgewinde oder eine schneckenförmige Verzahnung auf. Als Stellantrieb kommt insbesondere ein elektrischer Antrieb in Frage, Durch die gelenkige Ankopplung des Gelenkelements an das zweite Ankoppelelement können Spannungen und Radialkräfte, die sich aufgrund einer Verstellung des ersten Lichtmoduls 12 um seine zweite Achse 20 und die damit verbundene Schrägstellung der ersten Achse 18 des ersten Lichtmoduls 12 zur ersten Achse 22 des zweiten Lichtmoduls 14 ergeben, kompensiert und vom Stellelement 28 ferngehalten werden.

Durch ein Verdrehen des zweiten, rotierbaren Koppelelements 36 relativ zu dem ersten Koppelelement 34 bewegen sich Außengewinde und Innengewinde aneinander entlang. Dadurch verschieben sich das erste Koppelelement 34 und das zweite Koppelelement 36 längs der Rotationsachse der Gewindeverbindung relativ zueinander. Die Kolbenstange 26 verlängert oder verkürzt sich entsprechend einem Drehsinn der Gewindeverbindung.

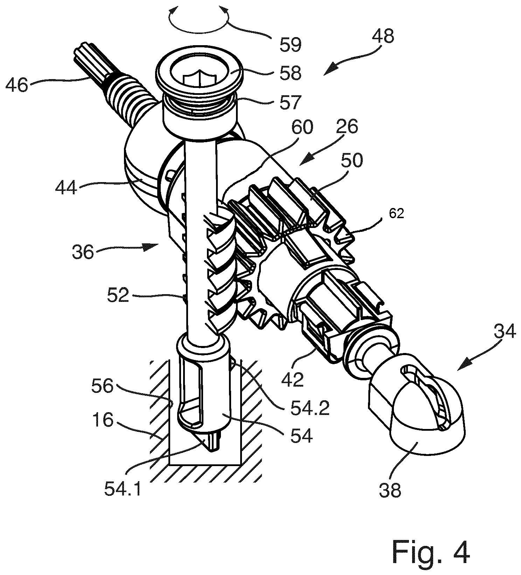

Es ist bevorzugt, eine Drehbewegung mittels eines Schneckengetriebes 48 auf den ersten Teil zu übertragen. Dazu ist, wie in Figur 3 und Figur 4 dargestellt, ein Zahnrad 50 koaxial zur Rotationsachse der Gewindeverbindung verdrehsicher zwischen den beiden Enden des zweiten, rotierbaren Koppelelements 36 angeordnet. Durch Antreiben des Zahnrads 50 wird das zweite, rotierbare Koppelelements 36 daher auf dem ersten Koppelelement 34 rotiert.

Figur 4 zeigt, dass eine Schneckenwelle 52 in das Zahnrad 50 greift. Das Zahnrad 50 und die Schneckenwelle 52 bilden ein Schneckengetriebe 48. Eine Rotationachse der Schneckenwelle 52 steht senkrecht zur Rotationsachse des zweiten Koppelements 36. Die Schneckenwelle 52 weist an einem ersten Ende eine Aufnahme 54 auf. Die Aufnahme 54 ist dazu eingerichtet, in eine ortsfest mit dem Gehäuse 16 verbundene Führung 56 eingesetzt zu werden. Die Aufnahme 54 ist mit Positionierungselementen 54.1 und Rastelementen 54.2 versehen. Die Positionierungselemente 54.1 erleichtern das Einsetzen der Schneckenwelle 52 in die Führung 56. Die Rastelemente 54.2 verrasten die Schneckenwelle 52 in axialer Richtung, nicht aber in Umfangsrichtung, in der Führung 56, so dass die beim Rotieren der Schneckenwelle 52 durch die Verzahnung des Zahnrads 50 einwirkenden Axialkräfte aufgenommen werden. An einem zweiten Wellenende ist die Schneckenwelle 52 bevorzugt dazu eingerichtet, in einer Durchführung im Gehäuse 16 drehbar gelagert zu werden. Die Durchführung ist abgedichtet, so dass Schmutz und Feuchtigkeit nicht in das Gehäuse 16 gelangen. Dazu sind am zweiten Wellenende Dichtelemente 57 angeordnet. Die Dichtelemente 57 können beispielsweise als O-Ringe ausgebildet sein. Denkbar ist auch die Ausbildung des Dichtelements 57 als Labyrinthdichtung. Dabei weist das zweite Wellenende Formelemente auf, die mit an der Durchführung angeordneten Formelementen ineinandergreifen. An einer Stirnseite des zweiten Wellenendes weist die Schneckenwelle 52 ein Mitnahmeprofil 58 auf. In der dargestellten Ausgestaltung ist das Mitnahmeprofil 58 als Innensechskant ausgeführt. Es ist auch denkbar, das Mitnahmeprofil 58 als Sonderprofil auszuführen. Mittels eines in das Mitnahmeprofils 58 eingesteckten Werkzeugs wird die Schneckenwelle 52 in eine Rotation 59 versetzt. Eine Schneckengeometrie 60 greift in eine Zahngeometrie 62 des Zahnrads 50 ein und treibt dieses an. Das Zahnrad 50 rotiert, und damit rotiert auch der verdrehsicher mit dem Zahnrad 50 verbundene erste Teil des zweiten Koppelelements 36.

Es ist bevorzugt, dass die Schneckenwelle 52 nur über 180° ihres Umfangs eine Schneckengeometrie 60 aufweist. Dadurch kann die Schneckenwelle 52 beispielsweise durch eine Öffnung im Gehäuse 16 in die Führung 56 eingesetzt werden, so dass die Schneckengeometrie 60 nicht in die Zahngeometrie 62 des Zahnrades 50 eingreift. Durch Drehung der Schneckenwelle 52 kommt die Schneckengeometrie 60 in Eingriff. Solange die Schneckengeometrie 60 in die Zahngeometrie 62 eingreift und rotiert, wird, je nach Drehsinn, die Koppelstange 26 verlängert oder verkürzt und damit das zweite Lichtmodul 14 relativ zum ersten Lichtmodul 12 justiert.

Weiterhin ist bevorzugt, dass die Schneckengeometrie 60 als mehrgängige, insbesondere als zweigängige Schnecke ausgeführt ist. Ein Übersetzungsverhältnis ergibt sich bei einem Schneckengetriebe als Quotient aus der Anzahl der Zähne des Zahnrads 50 und der Anzahl der Gänge der Schneckenwelle 52. Das heißt, dass die Schneckenwelle 52 ein Vielfaches der Umdrehungen des Zahnrads 50 ausführt. Dadurch erhält man zwar eine feine Verstellung des Zahnrades 52 und damit der Länge der Koppelstange 26. Andererseits benötigt die Einstellung der Länge der Koppelstange 26 viel Zeit, da die Schneckenwelle 52 unter Umständen viele Umdrehungen ausführen muss, bis eine gewünschte Längenänderung der Koppelstange 26 erreicht ist. Durch die Ausführung der Schneckengeometrie 60 als zweigängige Schnecke wird die Anzahl der für eine gewünschten Längenänderung notwendigen Umdrehungen gegenüber der eingängigen Schnecke halbiert.

Nach erfolgter Justage wird die Schneckengeometrie 60 durch Drehung der Schneckenwelle 52 wieder außer Eingriff gebracht und die Schneckenwelle 52 kann aus dem Gehäuse 16 entweder entfernt oder im Gehäuse 16 versenkt und eingerastet werden.

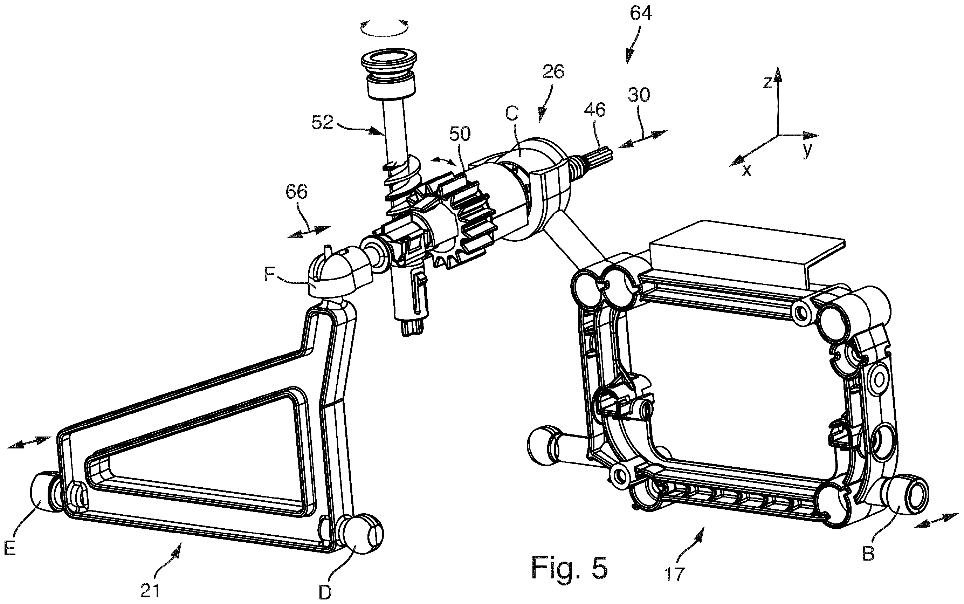

Die Figur 5 zeigt mechanische Elemente 64 des Scheinwerfers 10. Die mechanischen Elemente 64 weisen einen ersten Halterahmen 17 und einen zweiten Halterahmen 21 auf. Die längenverstellbare Koppelstange 26 verbindet den dritten Punkt C des ersten Halterahmens 17 mit dem dritten Punkt F des zweiten Haltrahmens 21. In dem ersten Halterahmen 17 und dem zweiten Halterahmen 21 ist jeweils ein Lichtmodul so angeordnet, dass seine Hauptabstrahlrichtung parallel zur x-Achse des gedachten Koordinatensystems liegt.

Eine vertikale Einstellung der Lichtverteilung der

Lichtmodule erfolgt durch ein Kippen des entsprechenden Halterahmens um seine erste Achse, die zwischen dem ersten Punkt und dem zweiten Punkt verläuft. Das Kippen wird durch eine Verschiebung des dritten Punktes senkrecht zur x-y-Ebene bewirkt. Bei der Justage des zweiten Lichtmoduls 14 erfolgt die Verschiebung 66 des dritten Punkts F relativ zum dritten Punkt C des ersten Halterahmens 17. Dazu wird die Koppelstange 26 mittels des die Schneckenwelle 52 und das Zahnrad 50 aufweisenden Schneckengetriebes 48 entsprechend den voranstehenden Erläuterungen verlängert oder verkürzt.

Im Gegensatz zum Stand der Technik muss für die vertikale Justage des zweiten Lichtmoduls 14 der erste Punkt D nicht verschiebbar sein. Deshalb kann er als Festlager ausgebildet sein. Eine ortsfeste Anordnung des ersten Punktes D im Gehäuse 16 erlaubt eine stabile, spielarme Lagerung insbesondere von großen, schweren und/oder nicht in ihrem Schwerpunkt aufgenommenen Lichtmodulen.

Zur Grundeinstellung des Scheinwerfers 10 werden die Lichtverteilung des ersten Lichtmoduls 12 und die Lichtverteilung des zweiten Lichtmoduls 14 gleichzeitig und gleichmäßig in vertikaler Richtung verschoben. Das bedeutet, dass der erste Halterrahmen 17 um seine erste Achse 18 gekippt wird und gleichzeitig damit gekoppelt der zweite Halterahmen 21 um seine erste Achse 22 gekippt wird. Das in der Figur 5 nicht dargestellte Stellelement 28 verschiebt die Koppelstange 26, ohne deren Länge zu ändern. Die Koppelstange 26 ist im dritten Punkt C gelenkig mit dem ersten Halterahmen 17 und im dritten Punkt F gelenkig mit dem zweiten Halterahmen 21 verbunden. Die Schneckenwelle 52 ist nicht mit dem Zahnrad 50 im Eingriff, so dass eine Länge der Koppelstange 26 nicht verändert wird. Folglich wird die Bewegung 30 gleichzeitig und gleichmäßig auf den ersten Halterahmen 17 und den zweiten Halterahmen 21 übertragen.

Eine horizontale Einstellung der Lichtverteilung der Lichtmodule erfolgt durch ein Kippen des entsprechenden Halterahmens um seine zweite Achse. Die zweite Achse verläuft jeweils zwischen dem ersten Punkt und dem dritten Punkt eines Halterahmens. Das Kippen wird durch eine Bewegung des zweiten Punktes senkrecht zur y-z-Ebene erzeugt. Die horizontale Einstellung der beiden Lichtmodule ist in der Regel nicht gekoppelt. Um die bei horizontaler Einstellung in den mechanischen Elementen 64 auftretenden Spannungen zu vermeiden oder auszugleichen, wird der erste Halterahmen 17 in seinem dritten Punkt C mit dem Gelenkelement 44 der Koppelstange 26 verbunden. Das Gelenkelement 44 gleicht ein Moment aus, das bei der horizontalen Einstellung des ersten Halterahmens 17 auftritt.

## Patentansprüche

1. Kraftfahrzeugscheinwerfer (10) mit einem Gehäuse (16), einem ersten Lichtmodul (12) und einem zweiten Lichtmodul (14), die beide in dem Gehäuse (16) angeordnet sind, wobei das erste Lichtmodul (12) um eine eigene erste Achse (18) und um eine eigene zweite Achse (20) schwenkbar ist, die zweite Achse (20) zur ersten Achse (18) senkrecht steht und die erste Achse (18) in einem gemeinsamen ersten Punkt (A) schneidet, und die zweite Achse (20) durch einen dritten Punkt (C) des ersten Lichtmoduls (12) geht, und wobei das zweite Lichtmodul (14) um eine eigene erste Achse (20) und um eine eigene zweite Achse (24) schwenkbar ist, die zweite Achse (24) zur ersten Achse (20) senkrecht steht und die erste Achse (20) in einem gemeinsamen ersten Punkt (D) schneidet und die zweite Achse (24) durch einen dritten Punkt (F) des zweiten Lichtmoduls (14) geht, und wobei die jeweiligen dritten Punkte (C, F) der beiden Lichtmodule (12, 14) über eine Koppelstange (26) beweglich miteinander verbunden sind, so dass beide Lichtmodule (12, 14) um ihre jeweilige erste Achse (18, 22) gleichzeitig und um gleiche Schwenkwinkel schwenkbar sind, und wobei die ersten Achsen bei einer bestimmungsgemäßen Verwendung des Scheinwerfers im Fahrzeug horizontal liegen **dadurch gekennzeichnet, dass** die Koppelstange (26) ein erstes stabartiges Koppelelement (34) und ein zweites stabartiges Koppelelement (36) aufweist, wobei ein erstes der beiden stabartigen Koppelelemente in dem dritten Punkt des ersten Lichtmoduls beweglich an das erste Lichtmodul angelenkt ist und ein zweites der beiden stabartigen Koppelelemente in dem dritten Punkt des zweiten Lichtmoduls beweglich an das zweite Lichtmodul angelenkt ist und wobei die Koppelelemente (34, 36) an einem, dem jeweils ersten Ende gegenüberliegenden zweiten Ende mittels einer Gewindeverbindung miteinander verbunden sind, wobei eines der Koppelelemente (34) auf der Gewindeverbindung nicht rotierbar ist und ein erster Teil des anderen Koppelelements (36) auf der Gewindeverbindung rotierbar ist, und dass das zweite Koppelelement (36) mittels eines Schneckengetriebes (48) rotiert werden kann, wobei ein Zahnrad (50) koaxial zu einer Rotationsachse der Gewindeverbindung an dem zweiten Koppelelement (36) angeordnet ist und eine Schneckenwelle (52) senkrecht zu der Rotationsachse angeordnet ist.

2. Kraftfahrzeugscheinwerfer (10) nach Anspruch 1, **dadurch gekennzeichnet, dass** die Lichtmodule (12, 14) in ihrem ersten Punkt (A, D) und ihrem zweiten Punkt (B, E) und ihrem dritten Punkt (C, F) Kugelgelenke aufweisen.

3. Kraftfahrzeugscheinwerfer (10) nach einem der vorangehenden Ansprüche, **dadurch gekennzeichnet, dass** das erste Lichtmodul (12) in seinem dritten Punkt (C) über ein Gelenkelement (44) an die Koppelstange (26) angekoppelt ist.

4. Kraftfahrzeugscheinwerfer (10) nach einem der vorangehenden Ansprüche, **dadurch gekennzeichnet, dass** das erste Lichtmodul (12) und das zweite Lichtmodul (14) jeweils in einem Festlager aufgenommen ist.

5. Kraftfahrzeugscheinwerfer (10) nach einem der vorangehenden Ansprüche, **dadurch gekennzeichnet, dass** das Zahnrad (50) an einem Umfang zwischen einem ersten Enden und einem dem ersten Ende gegenüberliegenden zweiten Ende des zweiten Koppelelements (36) angeordnet ist.

6. Kraftfahrzeugscheinwerfer (10) nach einem der vorangehenden Ansprüche, **dadurch gekennzeichnet, dass** die Schneckenwelle (52) nur auf halben Umfang eine Schneckengeometrie (60) aufweist.

7. Kraftfahrzeugscheinwerfer (10) nach Anspruch 6, **dadurch gekennzeichnet, dass** die Schneckengeometrie (60) als mehrgängige, insbesondere als zweigängige Schnecke ausgeführt ist.

8. Kraftfahrzeugscheinwerfer (10) nach einem der vorangehenden Ansprüche, **dadurch gekennzeichnet, dass** ortsfest im Gehäuse (16) eine Führung (56) angeordnet ist, die dazu eingerichtet ist, ein erstes Wellenende der Schneckenwelle (52) zu lagern.

9. Kraftfahrzeugscheinwerfer (10) nach einem der vorangehenden Ansprüche, **dadurch gekennzeichnet, dass** ein zweites Wellenende der Schneckenwelle (52) ein Mitnahmeprofil (58) aufweist.

10. Kraftfahrzeugscheinwerfer (10) nach Anspruch 9, **dadurch gekennzeichnet, dass** das Mitnahmeprofil (58) als Innensechskant ausgeführt ist.

11. Kraftfahrzeugscheinwerfer (10) nach Anspruch 9 oder 10, **dadurch gekennzeichnet, dass** das zweite Wellenende der Schneckenwelle (52) in einer Durchführung im Gehäuse (16) gelagert ist.

12. Kraftfahrzeugscheinwerfer nach Anspruch 11, **dadurch gekennzeichnet, dass** das die Durchführung und/oder das zweite Wellenende Dichtelemente (57) aufweisen.

## Claims

1. A motor vehicle headlight (10) having a housing (16), a first light module (12) and a second light module (14), both of which are located in the housing (16), in which the first light module (12) is pivotable about its own first axis (18) and about its own second axis (20), the second axis (20) is perpendicular to the first axis (18) and intersects the first axis (18) at a common first point (A), and the second axis (20) passes through a third point (C) of the first light module (12), and in which the second light module (14) is pivotable about its own first axis (20) and about its own second axis (24), the second axis (24) is perpendicular to the first axis (20) and intersects the first axis (20) at a common first point (D) and the second axis (24) passes through a third point (F) of the second light module (14), and in which the respective third points (C, F) of the two light modules (12, 14) are connected movably to one another via a coupling rod (26), so that both light modules (12, 14) are pivotable simultaneously and by identical pivot angles about their respective first axis (18, 22), and in which the first axes, when the headlight is used as intended, are located horizontally in the vehicle, **characterized in that** the coupling rod (26) has a first rodlike coupling element (34) and a second rodlike coupling element (36), and a first one of the two rodlike coupling elements is movably articulated onto the first light module at the third point of the first light module, and a second one of the two rodlike coupling elements is movably articulated onto the second light module at the third point of the second light module, and the coupling elements (34, 36) are connected to one another, on a second end that is opposite the respective first end, by means of a threaded connection, and one of the coupling elements (34) is not rotatable on the threaded connection and a first part of the other coupling element (36) is rotatable on the threaded connection; and that the second coupling element (36) can be rotated by means of a worm gear (48), and a gear wheel (50) is located on the second coupling element (36) coaxially to a rotary axis of the threaded connection and a worm shaft (52) is located perpendicular to the rotary axis.

2. The motor vehicle headlight (10) of claim 1, **characterized in that** the light modules (12, 14) have ball joints at their first point (A, D) and their second point (B, E) and their third point (C, F).

3. The motor vehicle headlight (10) of one of the foregoing claims, **characterized in that** the first light module (12) is coupled at its third point (C) to the coupling rod (26) via a joint element (44).

4. The motor vehicle headlight (10) of one of the foregoing claims, **characterized in that** the first light module (12) and the second light module (14) are each received in a fixed bearing.

5. The motor vehicle headlight (10) of one of the foregoing claims, **characterized in that** the gear wheel (50) is located on a circumference between a first end and a second end, is opposite the first end, of the second coupling element (36).

6. The motor vehicle headlight (10) of one of the foregoing claims, **characterized in that** the worm shaft (52) has a wormlike geometery (60) over only half of its circumference.

7. The motor vehicle headlight (10) of claim 6, **characterized in that** the wormlike geometry (60) is embodied as a multi-threaded, in particular double-threaded, worm.

8. The motor vehicle headlight (10) of one of the foregoing claims, **characterized in that** a guide (56), which is arranged for supporting a first shaft end of the worm shaft (52), is located in stationary fashion in the housing (16).

9. The motor vehicle headlight (10) of one of the foregoing claims, **characterized in that** a second shaft end of the worm shaft (52) has a slaving provile (58).

10. The motor vehicle headlight (10) of claim 9, **characterized in that** the slaving profile is embodied as a hexagon socket.

11. The motor vehicle headlight (10) of claim 9 or 10, **characterized in that** the second shaft end of the worm shaft (52) is supported in a lead-through in the housing (16).

12. The motor vehicle headlight of claim 11, **characterized in that** the lead-through and/or the second shaft end have sealing elements (57).

## Revendications

1. Phare de véhicule (10) comprenant un boîtier (16), un premier module de lumière (12) et un second module de lumière (14) qui sont tous deux montés dans le boîtier (16), le premier module de lumière (12) pouvant pivoter autour d'un premier axe particulier (18) et autour d'un second axe particulier (20), le second axe (20) étant perpendiculaire au premier axe (18), coupant le premier axe (18) en un premier point commun (A), et passant par un troisième point (C) du premier module de lumière (12), le second module de lumière (14) pouvant pivoter autour d'un premier axe particulier (22) et autour d'un second axe particulier (24), le second axe (24) étant perpendiculaire au premier axe (22), coupant le premier axe (22) en un premier point commun (D) et passant par un troisième point (F) du second module de lumière (14), et les troisièmes points (C, F) des deux modules de lumière (12, 14) étant reliés en étant mobiles l'un par rapport à l'autre par une tige d'accouplement (26), de sorte que les deux modules de lumière (12, 14) puissent pivoter simultanément autour de leur premier axe respectif (18, 22) ce du même angle de pivotement, et les premiers axes étant situés horizontalement lors d'une utilisation correcte du phare dans le véhicule automobile, **caractérisé en ce que** la tige d'accouplement (26) comporte un premier élément d'accouplement en forme de barre (34) et un second élément d'accouplement en forme de barre (36), un premier des deux éléments d'accouplement en forme de barre étant articulé sur le premier module de lumière en étant mobile au niveau du troisième point de ce premier module de lumière, tandis que le second élément d'accouplement en forme de barre est articulé sur le second module de lumière en étant mobile, au niveau du troisième point de ce second module de lumière et les éléments d'accouplement (34, 36) étant reliés l'un à l'autre au moyen d'une liaison filetée à une seconde extrémité située à l'opposé de la première extrémité respective, l'un des éléments d'accouplement (34) ou premier élément d'accouplement étant monté fixe en rotation sur la liaison filetée et une première partie de l'autre élément d'accouplement (36) ou second élément d'accouplement étant mobile en rotation sur la liaison filetée, et le second élément d'accouplement (36) peut être déplacé en rotation au moyen d'un engrenage à vis sans fin (48), une roue dentée (50) étant montée co-axialement à l'axe de rotation de la liaison filetée sur le second élément d'accouplement (36), est un arbre hélicoïdal (52) étant monté perpendiculairement à l'axe de rotation.

2. Phare de véhicule (10) conforme à la revendication 1, **caractérisé en ce que** les modules de lumière (12, 14) comportent des articulations sphériques au niveau de leurs premiers points (A, D), de leurs seconds points (B, E) et de leurs troisièmes points (C, F).

3. Phare de véhicule (10) conforme à l'une des revendications précédentes, **caractérisé en ce que** le premier module de lumière (12) est accouplé à la tige d'accouplement (26) au niveau de son troisième point (C) par l'intermédiaire d'un élément d'articulation (44).

4. Phare de véhicule (10) conforme à l'une des revendications précédentes, **caractérisé en ce que** le premier module de lumière (12) et le second module de lumière (14) sont respectivement logés dans un palier fixe.

5. Phare de véhicule (10) conforme à l'une des revendications précédentes, **caractérisé en ce que** la roue dentée (50) est montée périphériquement entre une première extrémité et une seconde extrémité opposée à la première extrémité de l'élément d'accouplement (36).

6. Phare de véhicule (10) conforme à l'une des revendications précédentes, **caractérisé en ce que** l'arbre hélicoïdal (52) ne présente une géométrie hélicoïdale (60) que sur la moitié de sa périphérie.

7. Phare de véhicule (10) conforme à la revendication 6, **caractérisé en ce que** la géométrie hélicoïdale (60) est réalisée sous la forme d'une hélice à filetage multiple, en particulier à double filetage.

8. Phare de véhicule (10) conforme à l'une des revendications précédentes, **caractérisé en ce que** de manière fixe dans le boîtier (16) est installé un guidage (56) permettant de monter une première extrémité l'arbre hélicoïdal (52).

9. Phare de véhicule (10) conforme à l'une des revendications précédentes, **caractérisé en ce que** la seconde extrémité de l'arbre hélicoïdal (52) a un profil d'entraînement (58).

10. Phare de véhicule (10) conforme à la revendication 9, **caractérisé en ce que** le profil d'entraînement (58) est réalisé sous la forme d'un six pans interne.

11. Phare de véhicule (10) conforme à la revendication 9 ou 10, **caractérisé en ce que** la seconde extrémité de l'arbre hélicoïdal (52) est montée dans un passage du boîtier (16).

12. Phare de véhicule (10) conforme à la revendication 11, **caractérisé en ce que** le passage et/ou la première extrémité de l'arbre comporte(nt) des éléments d'étanchéité (57).
